Europäisches Patentamt

European Patent Office

Office européen des brevets

(19)

(11) **EP 1 041 741 A1**

(12) **EUROPEAN PATENT APPLICATION**

(43) Date of publication:
**04.10.2000  Bulletin 2000/40**

(51) Int Cl.$^7$: **H04B 7/185**

(21) Application number: **99302641.8**

(22) Date of filing: **01.04.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **ICO Services Ltd.**<br>**London W6 9BN (GB)**<br><br>(72) Inventors:<br>• **Grayson, Mark**<br>**London, W4 2QT (GB)** | • **Chomet, Patrick**<br>**London, NW2 3SN (GB)**<br>• **Mouly, Michel**<br>**Palaiseau (FR)**<br><br>(74) Representative: **Read, Matthew Charles et al**<br>**Venner Shipley & Co.**<br>**20 Little Britain**<br>**London EC1A 7DH (GB)** |

(54) **Radio link timeout**

(57)    A satellite mobile cellular telecommunications network includes a radio link between a satellite access node (SAN 1) and a user terminal (UT 1) via earth orbiting satellites 3a, 3b over diverse paths. During a call, the radio link is subject to time varying transmission errors as a function of the relative movement of the satellites e.g. timing errors and Doppler shift. Compensation data messages are successively transmitted to the user terminal during the call, containing data to compensate for the errors. The radio path is timed-out at UT 1 if compensation messages are not successfully decoded within a predetermined period set by a timer (T1, T2). Control for the individual, diverse paths is provided.

FIG. 1

EP 1 041 741 A1

**Description**

This invention relates to radio link control for a mobile telecommunications system and has particular but not exclusive application to satellite telecommunications systems.

Terrestrial mobile telecommunications systems are well known and a number of different systems have developed which operate according to different standards, both analog and digital. In Europe and the Far East, excluding Japan, and elsewhere, the digital Global System Mobile (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

For example in GSM, mobile stations such as mobile telephone handsets communicate with a land-based network over a radio interface. A radio link is established between the mobile station (MS) and one of a number of base stations (BTS) coupled to a base station controller coupled to a mobile switching centre (MSC). Details of the subscriber are held in the network by a home location register (HLR) and communicated to visitor location registers (VLRs) when the subscriber operates in a network. Details of the subscriber are also provided to the mobile station by a smartcard known as a subscriber identity module (SIM) which is inserted in the mobile station. Call traffic passes through the radio interface on in a number of TDMA channels. Call traffic is handled on a call traffic channel (TCH) at a relatively high data rate. An associated slow rate control channel (SACCH) is also provided which communicates system information between the mobile station and the BTS. The system information can be transmitted in a regular cyclic pattern of SACCH message blocks i.e. in a regular sequence. Communication over the radio link between the MS and BTS is known as a radio resource (RR) session.

There are situations when the RR session needs to be released, for example when the mobile station abruptly loses radio contact with the BTS, for instance on entering an underground car park, or when reception quality is otherwise degraded below an acceptable level. Such situations are determined at the mobile station by a radio link timeout counter which counts successful detection of SACCH message blocks. The criterion for RR release is when on average 33% or less of the SACCH message blocks are successfully received. The counter is configured to count upwards by two in response to a successful SACCH message block detection, up to a maximum value, and to be decremented by one each time a SACCH message block in the sequence of message blocks, is expected but not detected. When the counter reaches zero, the radio link is deemed broken. A corresponding counter can carry out the same process in the BTS.

Mobile telecommunication systems have been proposed that use satellite communication links between mobile user terminals and conventional terrestrial networks such as public switched telephone networks (PSTNs) and public land mobile networks (PLMNs). One network known as the IRIDIUM™ satellite cellular system is described in EP-A-0 365 885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone networks. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communications networks, ground stations are located at different sites around the world in order to communicate with the orbiting satellites and local PLMNs. In the ICO™ system and others, a visitor location register is associated with each of the satellite ground stations to register locally the individual user terminals. The visitor location registers communicate with a home location register for the satellite network.

The satellite constellation can be configured so that for any location of user terminal on the earth, more than one satellite is at an elevation of more than 10 degrees above the horizon and hence two satellites are usually available for communication concurrently with the user terminal. The availability of more than satellite permits so-called diversity operations in which a traffic logical channel can be transmitted between the ground and the user terminal concurrently via two satellites, in two paths, to mitigate effects of blockage and fading.

Diversity operation is described in GB-A-2 293 725, EP-A-0 837 568 and PCT/US96/19429.

The length of two paths from the ground to the user terminal via the satellites differs substantially with time as a result of orbital movement of the satellites. Also, the satellite movement introduces a Doppler shift in the transmitted signals. Thus, link control needs to be carried out in order to pre-compensate the timing and frequency of the transmitted signals in order that they arrive in a synchronised pattern via the two paths, within a pre-defined frequency band, in order that detection can reliably occur for signals transmitted over both of the paths, in both uplink and downlink directions. Furthermore, the compensation needs to be updated during a call to take account of changes in timing and Doppler shift, in order to ensure that the transmitted signals are reliably received. Link control messages containing the updates may included in the downlink SACCH during a call so that the user terminal can use them to update the frequency and timing of signals sent on the uplink.

The conventional RR session release counter used in terrestrial GSM requires that the link control data for all allocated paths is included in all SACCH messages. However, this is not economically feasible in satellite systems because of scarce bandwidth. Hence, the conventional release counter described above would not provide a reliable session release for a user terminal in a satellite system that is subject to the aforementioned Doppler and timing changes during a RR session when operating in an environment when bandwidth is a scarce resource. In such circumstances, the inclusion of the link control data is made optional and only included when an update is required. Hence, whilst successive SACCH message blocks may be received at the user terminal such as to increment the counter, a scenario can be envisaged whereby every SACCH message including optional link control data is not successfully received by the UT resulting in the allocated up-link channel drifting in frequency and subject to timing errors, so that that the corresponding up-link channel drifts out of band in terms of frequency and timing so as to be unusable. Thus, no RR session release would be produced by the counter, even though the up-link channel is unusable.

The present invention provides a solution to this problem.

According to the invention there is provided a method of providing a timeout at a user terminal for a radio path in a cellular mobile telecommunications network for which a radio traffic channel between the user terminal and a remote location is subject to time varying transmission errors as a function of their relative movement during a call, and compensation data messages are optionally transmitted to the user terminal containing data to compensate for the errors at the user terminal, the method comprising timing-out the radio path if the compensation data messages are not received within a predetermined period.

The user terminal may receive timeout control data corresponding to the predetermined period within which said compensation data messages are to be received and the radio path is timed out if the compensation data messages are not received within the predetermined period.

Thus, the path is timed out at the user terminal to assure a reliable RR session release, in the event that the channels drift in use due to a failure to receive a compensation signal such that the user terminal consequently fails to carry out compensation.

A traffic channel and associated control channel may be transmitted along the path with said compensation data messages being periodically transmitted in the slow associated control channel, the transmission characteristics of the user terminal being adjusted as a function of the compensation data.

The compensation data may relate to timing and/or frequency errors in respect of the signals transmitted along the path, with the timing and frequency of signals transmitted by the user terminal being controlled in accordance with the received compensation data. The timeout control data may be transmitted in the slow associated control channel.

A cell broadcast channel containing said control data may be transmitted to the cells of the network individually, so that the control data can be detected from one of the cell broadcast channels at the user terminal.

The network may comprise a satellite network with a satellite at said remote location, with signals transmitted to the satellite from the user terminal being compensated in accordance with the received compensation data messages to compensate for timing errors and frequency shift caused by orbital movement of the satellite relative to the user terminal.

The satellite system may provide path diversity and a radio link to the user terminal may be provided through the diverse paths. The paths may be timed out individually if compensation data messages are not received corresponding to the respective paths within a predetermined period.

A timeout signal may be transmitted from the user terminal over a non-timed out one of the paths for indication of disabling subsequent transmission of signals thereto over the timed-out path.

The invention also includes a user terminal for a cellular mobile telecommunications network wherein a radio traffic channel established on a path between the user terminal and a remote location is subject to time varying transmission errors as a function of their relative movement during a call, and compensation data messages are periodically transmitted to the user terminal containing data to compensate for the errors, the user terminal including timing-out processing circuitry to time out the path if the compensation data messages are not received within a predetermined period.

The processing circuitry may include at least one a timer to time whether the compensation data messages are received within the predetermined period.

The invention further includes a method of operating a base station of a mobile telecommunications network to release a radio path to a remote user terminal that is subject to time varying transmission errors comprising transmitting compensation data messages successively to the user terminal with a variable periodicity during a call, the messages containing data to compensate for the errors in signals transmitted by the user terminal towards the base station, and transmitting timer period data as a function of the periodicity of the compensation data messages, the user terminal being operative to time out the radio link if the compensation data messages are not received within a predetermined period determined as a function of the timer period data.

The path can be forced to release by controlling signals transmitted to the user terminal so that said compensation data messages are not received with the predetermined period at the user terminal and thereby cause time-out of the path.

This may involve changing the timing of the transmitted data compensation messages or altering the timer period.

The invention also includes a base station for a mobile telecommunications network comprising a transmitter/receiver configuration to provide a radio path with a remote user terminal that is subject to time varying transmission errors during a call, the transmitter being configured to transmit compensation data messages with a variable periodicity during a call for the user terminal containing data to compensate for said errors in signals transmitted by the user terminal towards the base station, and timer period data as a function of the periodicity of the compensation data messages whereby the user terminal can time out the radio path if the compensation data messages are not received within a predetermined period.

More preferably, the invention includes a base station operational in diversity mode able to receive an indication transmitted by a user terminal operational in a diversity mode indicating that the user terminal has timed out one or more but not all of the diverse radio paths due to compensation data corresponding to those paths being not received within a predetermined period the base station being operational to reconfigure the path allocation in dependence on the indication received from the user terminal and further confirm the new configuration to the user terminal with a handshake message.

In order that the invention may be more fully understood an embodiment thereof will now be described by way of example with reference to the accompanying drawings, in which:

Figure 1 is a schematic diagram of a satellite telecommunications system together with a local, land-based mobile telecommunications system, in accordance with the invention;

Figure 2 is a schematic diagram of the spot beam pattern produced by one of the satellites on the earth;

Figure 3 illustrates schematically different beam types and their associated cellular areas and Z-arcs, from the pattern shown in Figure 2;

Figure 4 is a schematic frequency/time diagram illustrating time slots for the FDMA transmission scheme;

Figure 5 is a schematic block diagram of the circuits of satellite 3a;

Figure 6 is a schematic diagram of the cell pattern produced by the spot beams of satellites 3a, 3b;

Figure 7 is a schematic diagram of a mobile user terminal;

Figure 8 is a schematic block diagram of the circuits of the user terminal shown in Figure 7;

Figure 9 is a schematic block diagram of SBS 1 shown in Figure 1;

Figure 10 is a schematic diagram of TDMA signals transmitted from between the satellites and the user terminal;

Figure 11 is a schematic diagram showing the relationship of the transmission path between a user terminal and satellite, referenced to a Z-arc;

Figure 12 is a schematic flow chart of the time-out process performed at UT1; and

Figure 13 illustrates process steps at SAN 1 for transmitting compensation data and timer period data to UT 1.

Overview of network

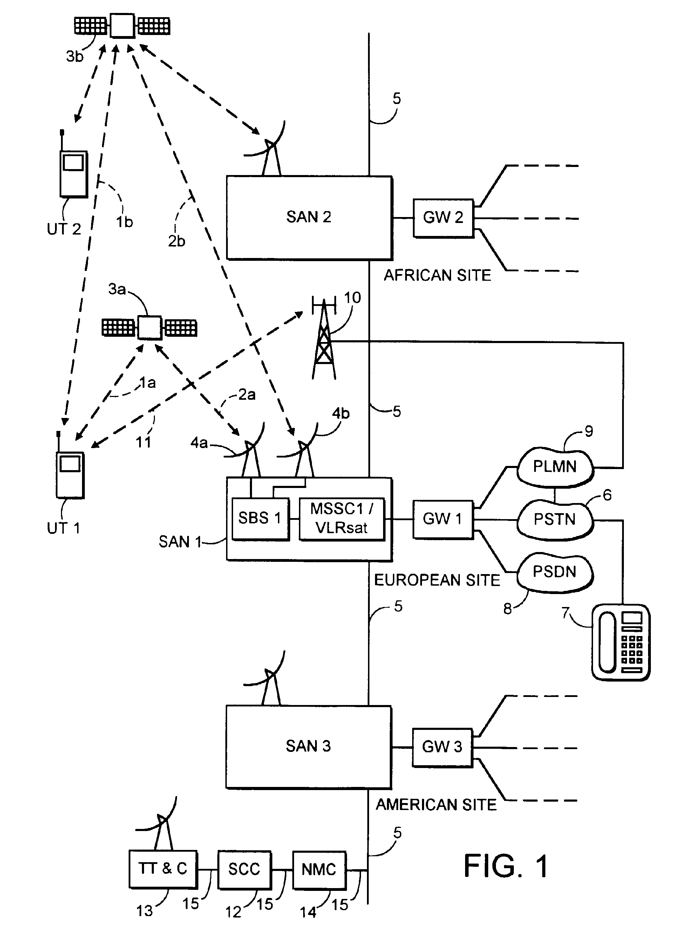

Referring to Figure 1, a schematic block diagram of a satellite mobile telecommunications network is shown corresponding to the ICO™ network. A mobile user terminal UT 1 in the form of a mobile telephone handset can communicate on a radio channel over a communication path 1a, 2a via an earth orbiting satellite 3a with a land-based satellite access node SAN 1. As shown schematically in Figure 1, SAN 1 is provided with a dish antenna arrangement that includes antenna 4a which can track the orbiting satellite 3a.

A number of the satellite access nodes SAN 1, 2, 3, etc are connected together to form a backbone network 5, which is connected through a number of gateways GW 1, 2, 3, etc to conventional land-based telephone networks. For example, the gateway GW 1, is connected to a land-based public switch telephone network (PSTN) 6, which permits connection to be made to a conventional telephone set 7. The gateway GW1 is additionally connected to a public switched data network (PSDN) 8 and a public land mobile network (PLMN) 9. Each of the gateways GW1, 2, 3 may comprise existing International Switching Centres (ISCs) or mobile switching centres (MSCs) of the type used in GSM mobile networks.

As shown in Figure 1, the handset UT 1 is a dual mode device which can also communicate with the conventional land-based mobile network PLMN 9, that is shown schematically to include a transceiver station 10 which establishes a duplex link 11 with the user terminal UT 1. In this example, the PLMN 9 is a GSM network. Thus the user can for example roam to the satellite network when out of range of the PLMN 9. For a fuller understanding of GSM, reference is directed to the various GSM Recommendations issued by the European Telecommunications Institute (ETSI).

The satellite network is designed to provide world-wide coverage and the satellite 3a forms part of a constellation of satellites, which may be arranged in several orbits. The satellites may be arranged in a MEO constellation, for example with an orbital radius of 10,355 km, although the invention is not restricted to a particular orbital radius. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing more than one concurrent communication path to the user terminal from a particular SAN. Additional satellites may be included in the constellation in order to provide redundancy.

In this embodiment, two satellites 3a, 3b of the constellation are shown in a common orbit and the satellites are tracked by the antenna arrangement 4 of each SAN. The antenna arrangement 4 for each SAN may for example include five dish antennas to track satellites individually, although only two of the dish antennas 4a, 4b for SAN 1 are shown in Figure 1 and only one dish is shown for the other SANs, in order to simplify the drawing. The dish antennas permit diverse communication paths to be established between the SANs and an individual user terminals via different satellites. In this example, the first communication path 1a, 2a is set up between dish antenna 4a of SAN 1 and user terminal UT 1 via satellite 3a, and a second communication path 1b, 2b is set up between dish antenna 4b of SAN 1 and user terminal UT 1 via satellite 3b, thus providing first and second diverse paths for concurrent communication of signal traffic between the satellite and the user terminal.

The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the dish antenna arrangement 4 for tracking the satellites, the SBS 1 including transmitter and receiver circuits with amplifiers, multiplexers, demultiplexer and codecs, which will be described in more detail later. A mobile satellite switching centre MSSC 1 is coupled to SBS 1 and includes a satellite visitor location register VLR$_{SAT}$ 1. MSSC 1 couples communication signals to the backbone network 5 and to the SBS 1, so as to allow individual telephone calls to be established through the backbone network 5 and the duplex communication link 1, 2 via the satellite 3a, to the mobile terminal UT 1. Also, MSSC 1 is connected to the gateway GW 1 so as to provide a connection to PLMN 9, PSDN 8 and PSTN 6. It will be understood that all the SANs are of similar construction with a respective VLR$_{SAT}$ to maintain a record of the subscribers registered, namely the identity of each user that is making use of the SAN 1 for signal communication.

In Figure 1, the SAN 2 is shown communicating with user terminal UT 2 via satellite 3b. For further details of the network, reference is directed to GB-A- 2 295 296 and EP-A-0 869 628.

The satellites 3a, 3b are in non geo-stationary orbits and comprise generally conventional hardware such as the Hughes HS 601. They may include features disclosed in GB-A-2 288 913.

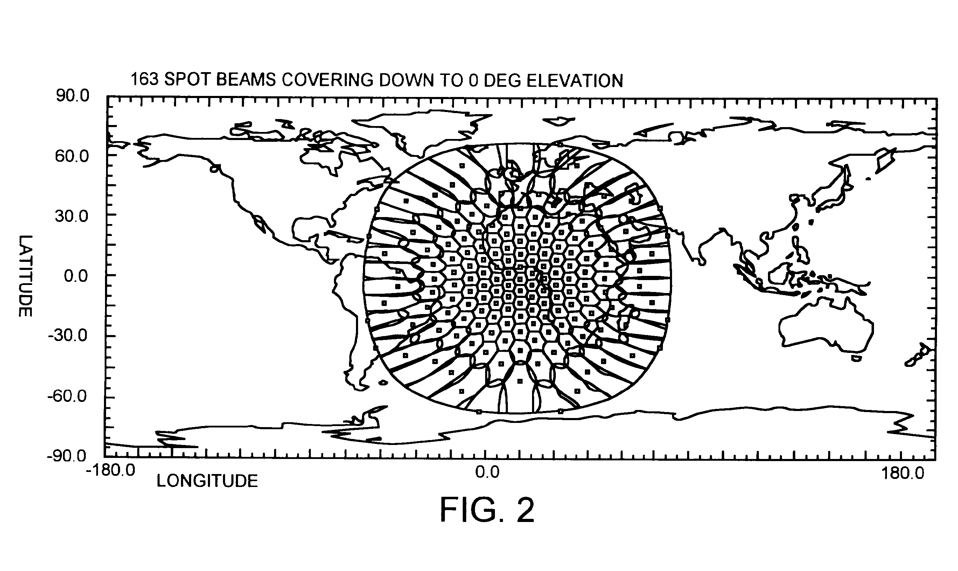

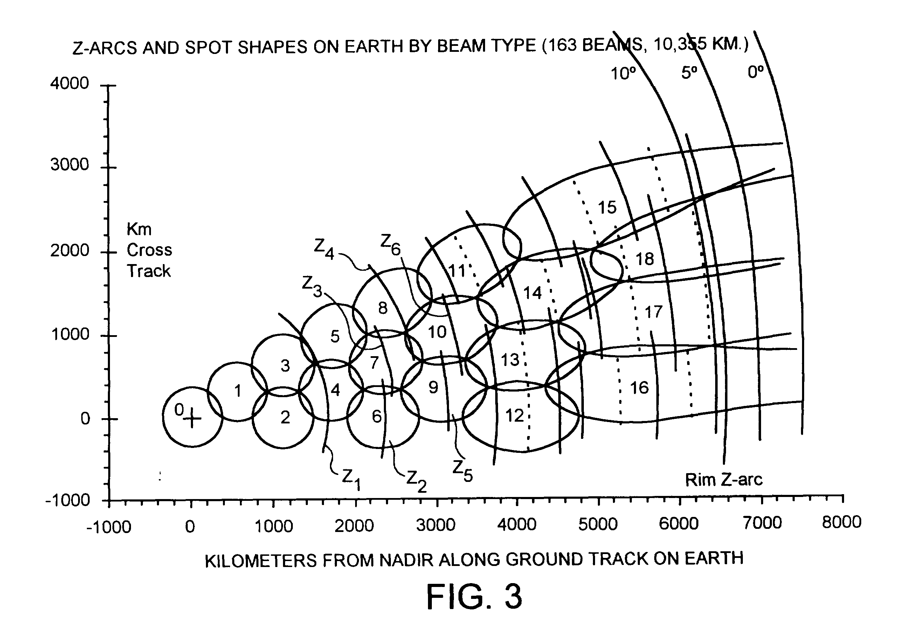

Each satellite 3a, 3b is arranged to generate an array of radio beams each with a footprint on the earth beneath the satellite, each beam including a number of different frequency channels and time slots as described in GB-A-2 293 725. The beams thus provide adjacent cellular areas which correspond to the cells of a conventional land-based mobile telephone network. Referring to Figure 2, in the ICO™ satellite mobile telephone system, each satellite 3a, 3b produces a fixed pattern of 163 spot beams, with the shapes of the spot beams varying as a result of the curvature of the earth to produce 19 different beam types (0 - 18), as shown in Figure 3.

The satellites are controlled by means of a satellite control centre (SCC) 12 and a telemetry tracking and control station (TT&C) 13, which are connected to a network management centre (NMC) 14 through a digital network 15 that is coupled to the backbone network 5. The SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

## Channel Configuration

During a telephone call, each of the user terminals communicates with a respective SAN via the satellites. A full duplex communication path is provided between the UT and the SAN. As referred to herein, communication from the SAN to the UT via the satellite is referred to as a "downlink", and communication directed from the UT via the satellite to the SAN is referred to as an "uplink". As will be explained in more detail hereinafter, the signals may travel over diverse paths between UT 1 and SAN 1 via satellite 3a or 3b or both of them concurrently.

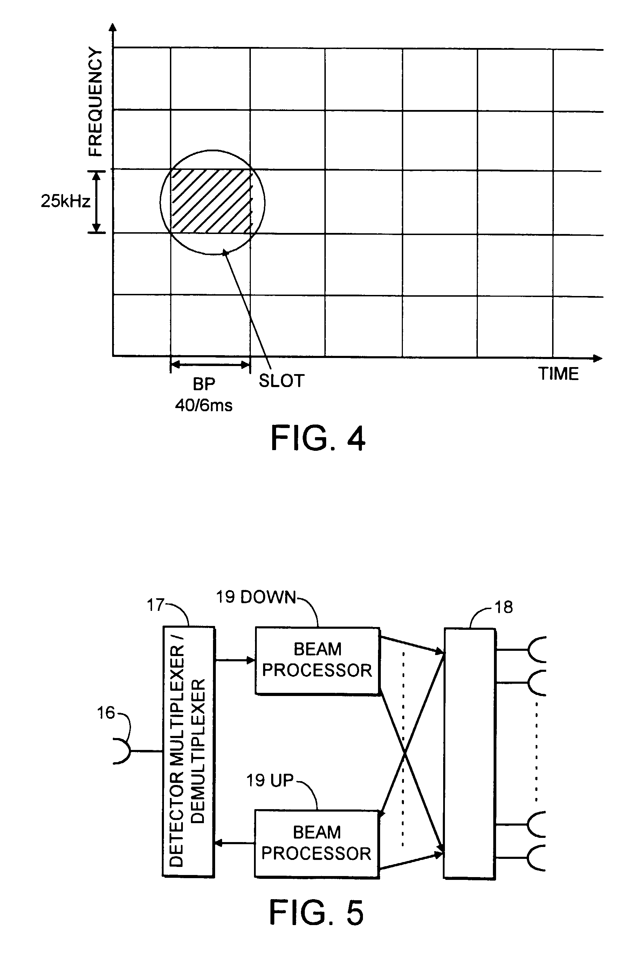

The general configuration of the transmitted signals is similar in some respects to those used for conventional GSM transmissions in a PLMN and makes use of a frequency diverse time division multiple access (TDMA) scheme. For speech transmission, data is sent on a traffic channel TCH. Each TCH is provided with an associated slow-rate control channel or SACCH. The configuration of these channels in the TDMA scheme will now be described in more detail. The basic unit of transmission between the SAN and UT is a series of about 100 modulated digital symbols, which is referred to as a burst. Bursts each have a finite duration and occupy a finite part of the radio spectrum. Thus, they are sent in time and frequency windows which are referred to as slots. The slots are positioned e.g. every 25kHz and recur in time every 40/6 ms (6.667ms). The duration of each slot is referred to as a burst period or BP. A graphical representation of a slot in the time and frequency domain is shown in Figure 4.

Each TCH consists of one slot every 6 BP and comprises a cycle of 25 slots. The SACCH is multiplexed over 12 consecutive slots. Two SACCH blocks are transmitted for every 25 slot cycle.

It will be appreciated that with this configuration, 6 TCHs can be interleaved due to the fact that each TCH consists of a slot every 6 BP. The resulting interleaved structure thus provides a 40 ms frame of 6 TCHs every 6 BP.

For signalling at a faster rate, a fast associated control channel or FACCH is provided. This corresponds to a TCH but is dedicated specifically for fast signalling.

Also, a downlink broadcast control channel BCCH is broadcast from each satellite to all UTs within a particular cell. The BCCH provides information which identifies the cell to the UT, which is received by the UT in idle mode i.e. when no call is being made. As each cell has is own BCCH, the relative signal strengths of the BCCHs at the UT can be used to determine which cell is to be used for TCH/SACCH communication with the UT. Other system information may be transmitted to the UTs of a particular cell in the BCCH in a similar manner to GSM. The BCCH message consists of a number e.g. 4 slots equally spaced every 100 BP.

A common downlink paging logical channel PCH is provided for each cell. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call. The PCH may consist of 1 to 10 slots every 25 BP and the AGCH may consist of e.g. 2, 4, 6, 8, 10 or 12 slots every 25 BP.

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

The SAN 1 to satellite 3a, 3b uplinks are located in a frequency band in the region of 5 GHz and the corresponding downlinks are in the region of 7 GHz. The satellite 3a, 3b to UT 1 downlinks are in the region of 2.1 GHz and the corresponding uplinks are in the region of 1.9 GHz, although the invention is not restricted to these frequencies. In this example, the individual TCH/SACCHs and BCCHs are assigned constant individual 25Kz wide frequency bands to provide a TDMA slot sequence as explained with reference to Figure 4.

## Satellite

A schematic diagram of the major signal processing components of each satellite is given in Figure 5. Signals transmitted from one of the SANs are received by antenna 16 and directed to a detector/multiplexer/de-multiplexer circuit 17. It will be understood that the signal transmitted from the SAN to the satellite contains a large number of TCH/SACCHs that are to be directed to individual UTs by the satellite. To this end, the satellite includes an array 18 of a plurality (for example 163) of antennas that produce individual spot beams that correspond to a cellular configuration as previously described. A beam forming processor circuitry configuration $19_{down}$ receives the various TCH/SACCHs that are de-multiplexed by circuit 17 and assembles them into multiplexed signals directed on 163 outputs to the spot beam antennas 18.

For signals on the uplink from the individual UTs to the SAN, the various transmissions are received by the spot beam antennas 18 and directed to processing circuitry $19_{up}$ which combines the various channels and passes them to the multiplexer configuration in circuit 17 for transmission through the antenna 16 to the SAN. It will be understood that the foregoing description of the satellite circuitry is schematic and for further details, reference is directed to GB-A-2 288 913 supra.

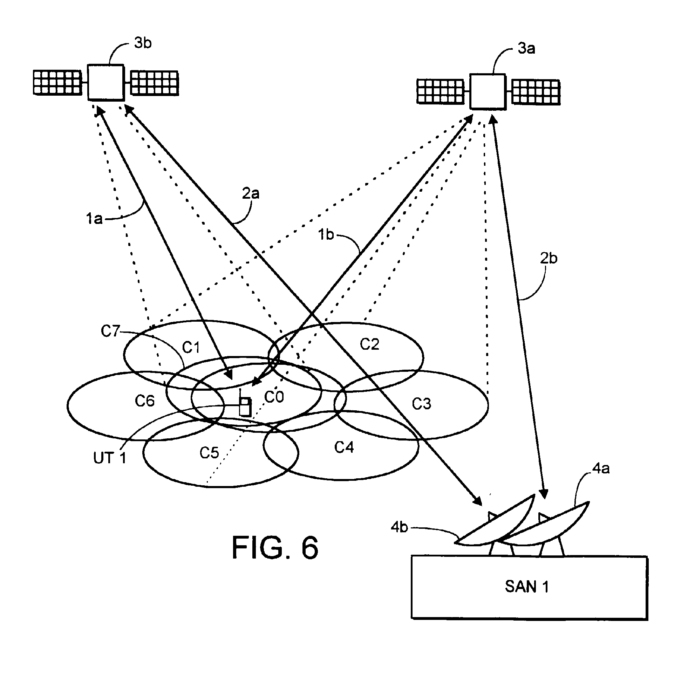

An example of cells C0 - C6 produced by the footprints of seven of the spot beams from antenna 18 of satellite 3a is shown in Figure 6. Also, one of the spot beams from satellite 3b is shown, which produces cell C7. The other beam footprints are omitted for purposes of clarity. The diverse communication paths between SAN 1 and UT 1 are shown. As previously explained, one path 1a, 2a extends between antenna 4a and UT 1 via satellite 3a. The other path 1b, 2b extends between antenna 4b and UT 1 via satellite 3b. These diverse paths make use of cells C0 and C7 of the satellites 3a and 3b.

## User terminal (UT 1)

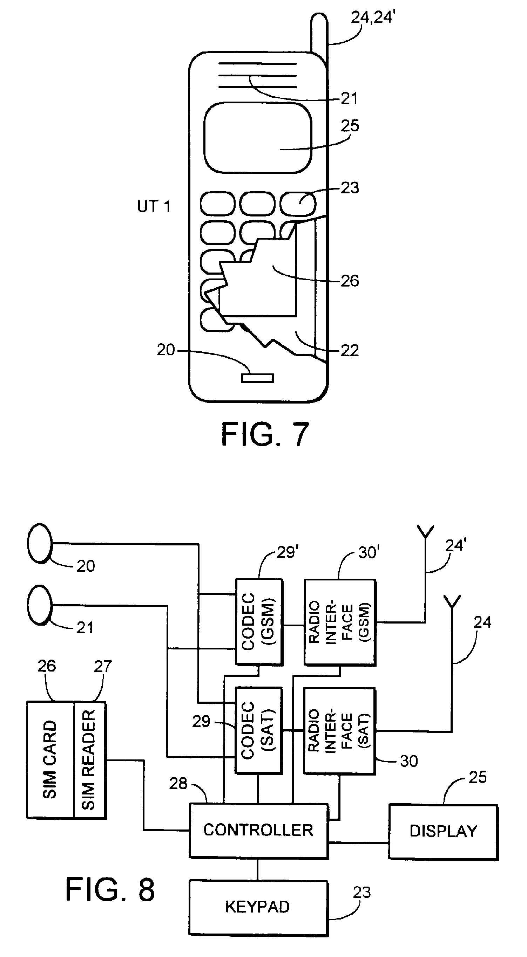

The mobile user terminal UT 1 is shown in more detail in Figures 7 and 8. It comprises a hand held device which is generally similar to a mobile telephone used for conventional terrestrial GSM networks. It is powered by a rechargeable battery (not shown) and is configured to operate either with the local terrestrial cellular network or to roam to the satellite network. Thus, in the example shown in Figure 1, the mobile handset UT 1 can operate either according to a land-based GSM protocol or according to the satellite network protocol. As shown in Figure 5, the handset comprises a microphone 20, an earpiece 21, a battery 22, a keypad 23, antennas 24, 24' and a display 25. The handheld unit UT 1 also includes a subscriber identification module (SIM) smartcard 26. The circuit configuration of the handset UT 1 is shown in block diagrammatic form in Figure 8. The SIM card 26 is received in an SIM card reader 27 coupled to a controller 28, typically a microprocessor. The microphone and loudspeaker 20, 21 are coupled to first and second codecs 29, 29' coupled to conventional radio interfaces 30a, 30b connected to the antennas 24, 24' so as to transmit and receive communication signals, in a manner well known per se. The handset is capable of dual mode operation, with the codec 29, radio interface 30 and antenna 24 being used with the satellite network, and corresponding circuits 29', 30' and 24' being used with the GSM PLMN 9. Amongst other things, the controller 28 can monitor the quality of received signals from the satellite network, as will be explained in more detail later.

**Satellite base station (SBS 1)**

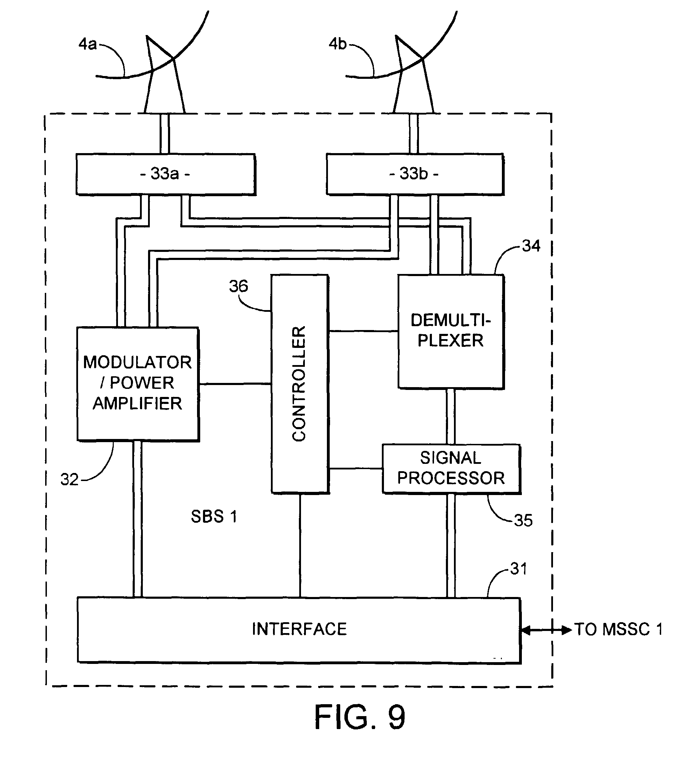

The configuration of the satellite base station SBS1 at SAN will now be described in more detail with reference to Figure 9. SBS1 comprises a network interface 31 providing an interface to MSSC 1, a modulator/power amplifier system 32, first and second feed units 33a, 33b for the dish antennas 4a, 4b, a de-multiplexer 34, a signal processing unit 35 and a controller 36. As previously explained, SAN 1 may include five dish antennas and the connections for only two of them are shown in Figure 7 in order to simplify the explanation.

The interface 31 receives communication signals from MSSC 1, routed from one of the various networks either through gateway GW 1 (Figure 1) or via the backbone network 5. The interface 31 reformats the signals for transmission to the UTs. Several calls are simultaneously supplied to the modulator/power amplifier system 32 and an interleaved TCH/SACCH is produced under the control of controller 36. A number of TCH/SACCHs are produced concurrently on different frequency bands and are fed to either one or both of the antennas 4a, 4b for onward downlink transmission via the satellites to individual user terminals. The feed units 33a, 33b feed the signals to the antennas 4a, 4b.

The antennas also receive uplink signals from the satellites and each feed unit 33a, 33b includes power combiners for combining the signals from the modulator/power amplification system 32 and a circulator for isolating the demultiplexer 34 from the combined signals and directing the combined signals to the respective antennas 4a, 4b.

Uplink signals received from the satellites are directed by the feed units 33a, 33b to the demultiplexer 34, which demultiplexes received uplink TCH/SACCHs and feeds the resulting signals via the signal processing unit 35 to the interface 31 for onward transmission to MSSC 1. The signal processing unit 35 extracts data from the received signals, which are fed to the controller 36 which in turn provides control data for UT1, which is modulated by modulator 32 onto signals transmitted to the UT, as will be described in more detail later.

**Service provision**

The described network can provide service to subscribers in a number of different ways. For example, communication may be provided from UT 1 to UT 2 using the satellite backbone network 5. Alternatively, telephone communication can be established between the telephone set 7 and UT 1 either via SAN 1 and the satellite network, or, through PLMN 9, antenna 10 and link 11. For further description of service options, reference is directed to EP-A-0 869 628.

In the following, a telephone call established between telephone set 7 and UT1 through SAN 1 and satellite 3a will be considered in more detail.

**Radio link configuration**

Referring to Figure 7, the TDMA frames which make up the TCH/SACCH, need to achieve synchronisation in order to achieve a satisfactory radio link between the SAN and UT 1. In the network described herein, link control is carried out referenced to each satellite, to ensure that integrity of the TDMA frame structure is maintained at the satellite, notwithstanding transmission delays to and from the satellite and Doppler shifts in frequency due to orbital motion of the satellite. It can be shown that choosing the satellite as the reference position reduces the overall complexity of the link control arrangements.

The issues associated with timing delays and Doppler shift will be considered in turn. Considering timing delays, for a terrestrial, cellular, mobile telephone network, the signal typically takes a few microseconds to travel from a base transmitter site antenna to a mobile station. Consequently, the transmitted TDMA time slot pattern is generally retained at the mobile station. A typical round trip delay for a 35km cell is of the order of ¼ slot. However, in a satellite mobile telephone system with the satellites 3a, 3b in a medium earth orbit, the time taken for signals to travel between a satellite 3a, 3b and a UT 1 is longer than a time slot. In the case of a satellite orbiting at 10355km, the one way propagation time to the satellite's nadir (where the satellite is seen at an elevation of 90° on the Earth) is approximately 34.5 ms, which is comparable with the previously described 40ms frame duration. This situation is further complicated by there being a significant difference between the path length to the cell at the nadir and the path lengths to the cells at the edge of the satellite's footprint. For a satellite orbiting at 10355km, the one way propagation time to a UT which sees the satellite at 0° elevation is approximately 51.6 ms. This leads to significant differences in the times at which bursts arrive at UTs and in the times when UTs are required to transmit in order for their signals to fit in with the TDMA frame structure at the satellite.

As previously mentioned, the up and downlink traffic channel signals are to be nominally synchronised in timing and carrier frequency at the satellite. In relation to timing synchronisation, this means that path delay variations on links to individual UTs need to be compensated as will now be explained.

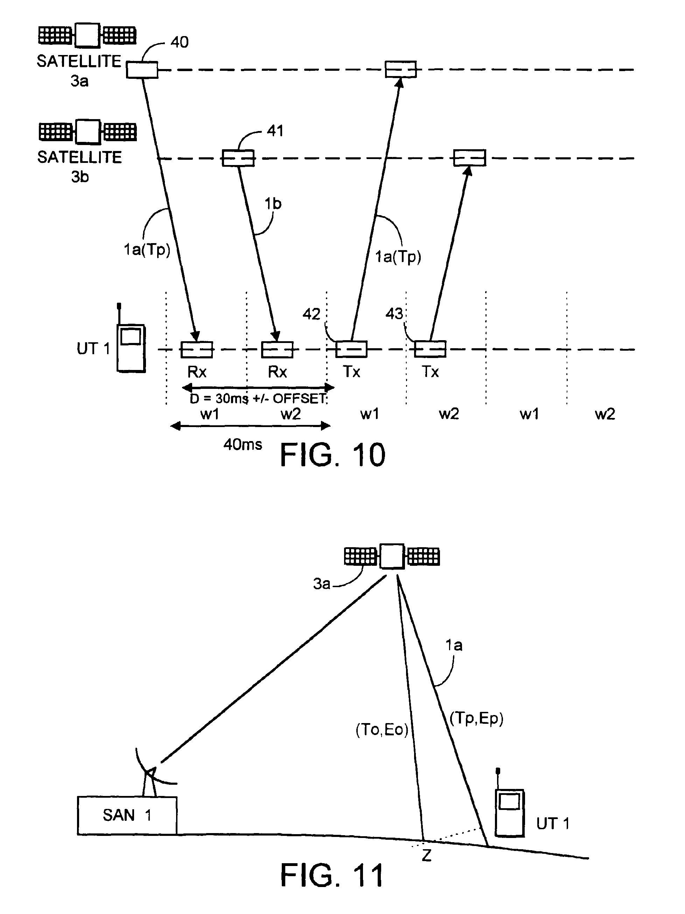

Referring to Figure 10, the transmission of successive downlink TDMA bursts 40, 41 from satellites 3a, b over paths 1a,b, to UT 1 is shown together with uplink bursts 42, 43 from the UT to the satellites. The bursts in this example have a duration of 40/6ms (6.667ms) as previously discussed, and form part of the TCH/SACCH. At UT 1, each 40ms frame N is defined as two 20ms diversity windows w1, w2 for communication with the two satellites 3a,b. Considering the downlink burst 40 transmitted from satellite 3a, it is transmitted at a time determined by the synchronisation pattern that is maintained at satellite 3a, over path 1a to UT 1 and received within the 20ms reception window w1. A transmission delay $T_P$ occurs over the path 1a between the satellite 3a and UT 1. The user terminal UT 1 is configured to transmit an uplink burst 42 after a nominal, predetermined time delay D following reception of the downlink burst 40. The uplink burst 42 also is subject to the transmission delay $T_P$ as it travels to the satellite 3a. The time delay D needs to be selected so that the uplink burst 42 is received at the satellite 3a at a time which fits into the periodic pattern of the TDMA structure at the satellite 3a, order to maintain synchronisation at the satellite. In this example, the time delay D is nominally 30ms but is subject to an offset $\pm\in_t$ to account for variations in location of the UT, as will be explained hereinafter.

Communication between the satellite 3b and the user terminal UT 1 occurs in a similar way. The downlink TDMA burst 41 is received in diversity window w2 at UT 1 from satellite 3b over path 1b and the uplink burst 43 is transmitted to the satellite 3b by the UT after a delay $D\pm\in_t$ so as to maintain synchronisation at the satellite 3b. Suitable values for $\in_t$ for each satellite path are selected individually, as explained hereinafter.

Compensation to achieve the necessary synchronisation is carried out by referencing the timing for bursts transmitted on the path between the satellite and the UT to one of a number of different individual transmission delay values $T_o$ for which a zero offset $\in_t$ is required . These different, individual transmission delay values map onto the surface of the Earth as arc-shaped contours Z shown in Figure 3. The location of the UT is considered in relation to one of these contours. When the UT is located on the contour, the timing delay corresponds to the individual value associated with the contour and the value of the timing offset $\in_t$ needed is zero in order to maintain synchronisation of the uplink and downlink bursts at the satellite. When the UT is positioned away from the contour, a timing offset $\in_t$ is needed relative to the value at the contour, to compensate for the longer transmission path length between the satellite and the UT. Since the arc-shaped contours Z of constant time delay require by definition, zero timing offset, the zero-offset arcs are referred to as Z-arcs.

In this example, each Z-arc delay value defines a path delay class which lies within +/- 1.4 ms of that value, so that 17 delay classes cover the 163 spot beams. Figure 3 shows Z-arcs $Z_n$ superimposed onto the spot beam types. Beam types 0 to 5, for example, have a path with delay variation of only 2.2 ms, and are therefore covered by a single Z-arc. In beam spots with more than one delay class, dotted arcs show the boundaries between delay classes.

The relationship between the timing offset $\in_t$, the path delay $T_P$ to the UT and the delay $T_o$ associated with an individual Z-arc can be seen from Figure 11 which shows the transmission delays over the paths associated with the satellite 3a. It can be seen that the timing offset, when referenced to the Z-arc, is given by:

$$\in_t = 2(T_P - T_o) \qquad (1)$$

The factor of two deals with the fact that compensation is needed for both the uplink and the downlink path between the UT and the satellite.

The offset $\in_t$, which, in this example has a maximum value of +/- 1.4 ms, can be calculated by SBS 1 and periodically sent to UT 1. The SBS 1 knows the Z-arc value corresponding to the delay class for each of one or more diverse paths to which the UT 1 has been allocated. It can determine the delay between itself and satellite 3a by sending and receiving loop-back transmissions. Other delays within the system can be measured or details obtained from the relevant equipment manufacturer, for example, in the case of satellite transponder delays, from the satellite manufacturer, and this information supplied to the SBS 1. Since the SBS 1 knows the various offsets (i.e. the delay D and others) applied by the UT between the received and transmitted bursts, it can use a received burst from the UT to calculate the actual path delay between the SBS and UT 1.

The way in which a UT is allocated a traffic channel will now be described. UT 1 first acquires system time and frequency from a BCCH. To initiate radio access, UT 1 transmits a formatted burst in a prescribed time slot on the RACH carrier frequency. SBS 1 searches for and acquires the UT RACH burst timing. As explained above, by knowing the received RACH time and various fixed offsets, the SBS can work out the actual path delay between the satellite 3a and the UT and therefore decide which Z-arc the UT should use, if the beam has more than one. The assignment of a traffic channel TCH/SACCH and initial pre-corrections are sent to the UT on the AGCH.

During the traffic exchange on the TCH/SACCH, SBS 1 pre-corrects the downlink frame timing of the bursts transmitted from the SAN 1 to the satellite so that the bursts, on arriving at the satellite, achieve the desired synchronisation pattern, that results in zero frame timing offset on Earth along the Z-arc. The UT locks to the corresponding received burst timing from the satellite 3a and pre-corrects and transmits its uplink burst 30ms +/- up to 1.4 ms later ($D \pm \in_t$) so as to maintain nominally zero timing error at the satellite 3a. The SBS 1 periodically, for example, once per minute, sends new timing offsets to UT 1, based on continuing measurement of uplink burst timing at SBS 1. Thus referring to Figure 9, the signal processor 35 measures timing errors in the received uplink bursts and based on this information, the controller 36 periodically encodes updated values of $\in_t$ in $SACCH_{down}$ using modulator 32 for transmission to UT 1.

A similar process occurs for the link established through satellite 3b, between SAN 1 and UT 1, for diversity operation. The bursts of the TCH/SACCH sent through satellite 3b are subject to a corresponding pre-compensation process in which SBS 1 computes timing offsets relative to a Z-arc appropriate for satellite 3b. The timing offsets are transmitted to UT 1 and used by it to pre-compensate uplink bursts of the TCH/SACCH routed through satellite 3b. Downlink bursts from the SAN to the satellite 3b are pre-corrected relative to the Z-arc for satellite 3b and also to maintain synchronism of the diversity windows w1, w2 at UT 1 for the satellites 3a, 3b. The periodic updating process will be described in more detail hereinafter.

As previously mentioned, a Doppler shift occurs in the frequency of the bursts transmitted between each satellite 3a,b and UT 1, which unless corrected, can result in bursts shifting in the frequency domain from one allocated slot to another. Compensation in the frequency domain is carried out by defining Z-arcs of zero Doppler frequency offset and performing compensation at UT 1 and at SBS 1 in the same manner as described herein for timing errors, but in respect of errors caused by Doppler shifts. Thus at SBS 1, a frequency pre-compensation and a frequency offset $\in_d$ is computed relative to a Doppler Z-arc, where:

$$\in_d = 2(E_d - E_o) \qquad (2)$$

$E_d$ is the Doppler shift for bursts on the path 1a between the satellite 3a and the UT 1, and $E_o$ is the Doppler shift to the Z-arc.

UT 1 thus applies to its transmitted bursts, a frequency shift $F_d$ and the frequency offset $\in_d$ sent from the SBS in order to achieve frequency compensation, in an analogous manner to the timing compensation process, but in the frequency domain, for the path via satellite 3a, and a corresponding process is carried out for the path via satellite 3b. The frequency offsets are computed at SBS 1 and periodically, updated values are sent to UT 1 on the downlink. Referring to Figure 9, this is achieved by the signal processor 35 measuring frequency deviations in the received uplink bursts and based on this information, the controller 36 periodically encoding updated values of $\in_d$ in $SACCH_{down}$ using modulator 32 for transmission to UT 1.

**Link timeout control**

A RR session release is produced in the event that the radio link between SAN 1 and UT 1 fails and the timeout process will now be described.

As previously mentioned, the timing and Doppler offsets $\in_t$, $\in_d$ and encoded in $SACCH_{down}$ messages to be transmitted from the SAN to the UT. As previously explained, the SACCH includes regularly transmitted message blocks that comprise 12 consecutive slots and the message blocks are sent every 0.5 seconds. In practice, the timing offset $\in_t$ and the frequency offset $\in_t$ do not need to be encoded in each SACCH message block. In order to provide effective control at the UT, the compensation data $\in_t \in_d$ needs only to be sent at a much slower rate and so can be omitted from some of the $SACCH_{down}$ message blocks. The rate at which the compensation data is sent varies depending on the rate of change of the timing offset and the frequency offset occurring during a call, which depends on the relative position of the UT and satellite. Typically, the compensation data $\in_t, \in_d$ is sent to the UT, to provide updates every 10~20 seconds. When operating in diverse communications the link control data can be multiplexed onto a single logical SACCH channel. However, it will be understood that the link control data for each of the diverse paths may be generated independently of each other.

In accordance with the invention, link timeout control is achieved by monitoring at UT 1 successful reception of the compensation data $\in_t, \in_d$. If this data is not successfully received, there is a risk that the UT will not update the timing and frequency control needed to maintain satisfactory synchronisation of the channel. Thus, there is a risk that the channel will drift off-frequency and loose its timing synchronisation. However, it may be that individual SACCH messages are received for more than 50% of the time but nevertheless, the channel structure would be unusable due to the frequency drift and so using a conventional GSM link timeout counter as previously described, would result in the channel remaining open even though it is not usable, thus undesirably using system resources. Data concerning the desired period within which a compensation data update $\in_t, \in_d$ is to be received at UT 1, is sent to the user terminal from SAN 1. If the compensation data is not successfully decoded at UT 1 within this period, the link is timed out.

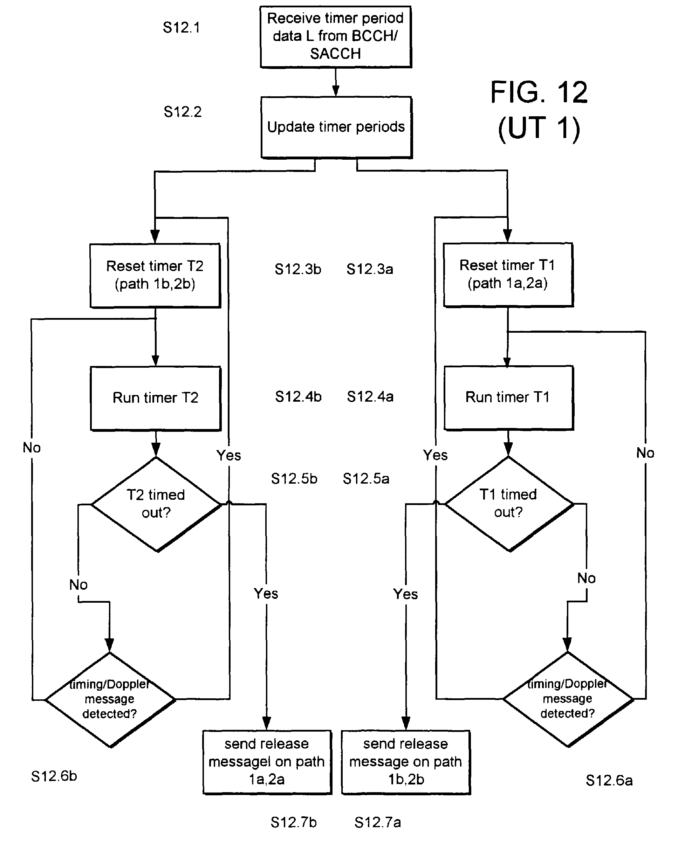

This procedure will now be described in more detail with reference to Figure 12, which illustrates the process in more detail. As previously explained, the radio link between SAN 1 and UT 1 extends over diverse paths through the satellites 3a, 3b as shown in Figure 6. The process illustrated in Figure 12 considers the paths 1a, 2a and 1b, 2b that extend via the two satellites individually and link control is performed for both of them. The controller 28 of UT 1 (Figure 8) which typically comprises a microprocessor, is configured to set up two timer functions which are shown in Figure 12 as timer T1 and T2, for the paths 1a, 2a and 1b, 2b respectively. The timers determine whether updates of $\in_t, \in_d$, are successfully decoded at UT 1 within a respective timed period. If not, it is assumed that the channel may have drifted out of synchronism or off-frequency and so needs to be released.

At step S12.1, timer period data L is received from SAN 1 at UT 1, concerning the repetition period of updates of the compensation data $\in_t, \in_d$ currently being sent in SACCH$_{down}$ message blocks. As previously explained, the update messages are sent with a variable period, depending on the rate of change of compensation needed.

As step S12.2, the data L is used to update the periods for which timers T1 and T2 will run. In this example, it is assumed that the data L is the same for each timer although it will be appreciated that different periods could be used for each path if their characteristics vary substantially. As previously mentioned, each path 1a, 2a and 1b, 2b are monitored individually. The path 1a, 2a, will now be considered in detail and it will be understood that the other path 1b, 2b is monitored in an identical manner.

At step S12.3a, the timer T1 is initialised and starts running at step S12.4a. It continues to run until it either times out after a period corresponding to the data L or is reset in response to successful decoding of a data compensation message $\in_t, \in_d$ from one of the SACCH$_{down}$ message blocks. Thus, at step S12.5a, the processor 28 checks to see whether timer T1 has timed out. If not, a check is made to see whether the compensation data $\in_t, \in_d$ has been successfully decoded from one of the SACCH$_{down}$ message blocks, i.e. within the period of the timer T1. This is performed at step S12.6a. If a compensation data message is successfully received, the timer is then reset at step S12.3a i.e. compensation data has been successfully received and decoded within the timer period L so that there is no need to release the path.

If step S12.6a reveals that no compensation data message has been successfully decoded, the timer continues to run at step S12.4a until such a message is decoded or until the timer times out, as detected at step S12.5a. This process indicates whether a compensation data message has been successfully decoded from the SACCH$_{down}$ message blocks within the period of timer T1. If not, the timer T1 times out and then, at step S12.7a, a RR release message is sent on FACCH$_{up}$ to SAN 1 in order to instruct it to stop using path 1a, 2a. This message is sent on path 1b, 2b in view of the fact that path 1a, 2a is no longer supporting reliable data transfers between SAN 1 and UT 1. On receipt of this message, the SBS will confirm the change of path allocation with a handshake message.

A corresponding process is carried out in respect of path 1b, 2b, at steps S12.3b - S12.7b.

It will thus be understood that data interchange can switch between the two paths which form the radio link depending on the outcome of the link timeout control process shown in Figure 12. When both paths are disabled, the link drops out entirely.

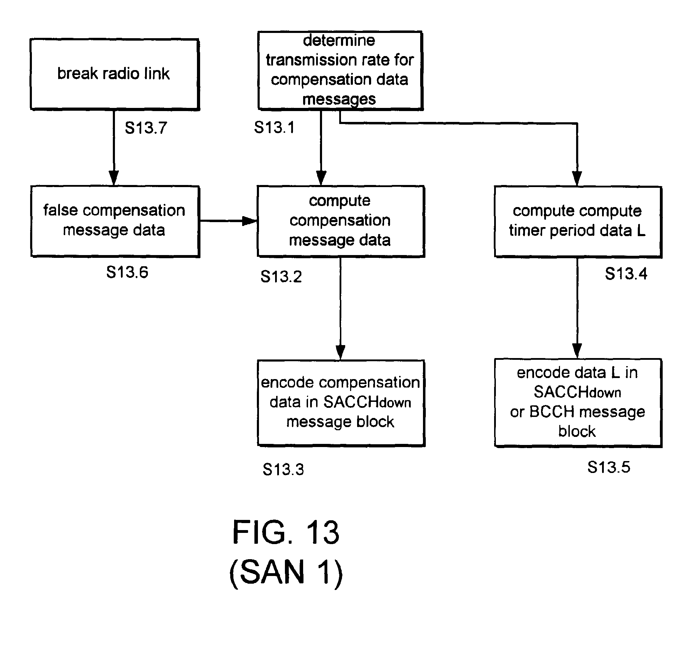

The process for encoding the compensation data $\in_t, \in_d$ and the timer period data L, at SAN 1, will now be described with reference to Figure 13. In step 13.1, a determination is made of the rate at which compensation data messages should be sent on the downlink to UT 1. This may determined from a model of the orbital paths of the satellites. The data may be received from MSSC1 via interface 31 and fed to controller 36 shown in Figure 9. As previously explained, signal processor 35 processes signals on the uplink to determine transmission errors in terms of frequency and timing so that the values of updates $\in_t, \in_d$ can be calculated. The computation of this compensation data is shown at step S13.2 in Figure 13. The resulting compensation data is then encoded into SACCH$_{down}$ message blocks by means of the modulator 32 shown in Figure 9. As previously explained, the data is not encoded into each and every SACCH$_{down}$ but instead to provide an update to the user terminal with a variable period determined at step S13.1. The encoding of the compensation data into SACCH$_{down}$ is shown at step S13.3. Preferentially, the encoding of $\in_t$ and $\in_d$ will include a fixed value, a time stamp and a rate of change for the user terminal to perform updates to link control in the periods between receiving updated link control data on the SACCH$_{down}$.

At step 13.4, corresponding timer period data L is calculated by controller 36, to act as timeout control data. This may be encoded either in SACCH$_{down}$ messages or in a corresponding BCCH, as shown at step S13.5. The encoding of the data L is performed by controller 36 and modulator 32 shown in Figure 9.

The system can also be used to force the radio link to time-out either for one of the paths 1a, 2a, or 1b, 2b or both of them. To this end, false compensation data is generated at step S13.6 in response to a break command generated at step S13.7. The false compensation data forces UT 1 to carry out an erroneous compensation for the channel frequency and timing. This in turn causes timer T1 or T2 or both of them to time-out and thereby release either one or both of the paths. It will be understood that the radio link can also be caused to break by producing false timer period data L at step S13.4, either individually or in combination with the false compensation data produced at step S13.6.

Many modifications and variations fall within the scope of the invention. For example, although the invention has been described in relation to the ICO™ system, it will be appreciated that it could be equally well applied to any of the satellite mobile telecommunications networks described in Scientific American *supra.* The technique could also be applied to a conventional land-based mobile telephone network, in which the diverse paths are provided by more than one cellular transmitter, such as transmitter 10 shown in Figure 1 if Doppler shift caused by movement of the UT is a problem.

Furthermore, although the preceding example of the invention relates specifically to time and/or frequency control, those skilled in the art will understand that the technique is equally applicable to other types of physical control information, for example power control information.

Also, whilst the user terminals UT have been described herein as mobile telephone handsets, it will be understood that they may be semi-mobile e.g. mounted on a ship or aircraft. The UT may also be stationary e.g. for use as a payphone in a geographical location where there is no terrestrial telephone network .

**Claims**

1. A method of providing a timeout at a user terminal for a radio path in a cellular mobile telecommunications network for which a radio traffic channel between the user terminal and a remote location is subject to time varying transmission errors as a function of their relative movement occurring during a call, and compensation data messages are optionally transmitted to the user terminal containing data to compensate for the errors at the user terminal, the method comprising timing-out the radio path if the compensation data messages are not received within a predetermined period.

2. A method according to claim 1 including receiving timeout control data at the user terminal corresponding to said predetermined period within which said compensation data messages are to be received and timing-out the radio path if the compensation data messages are not received within the predetermined period.

3. A method according to claim 2 wherein a traffic channel and associated control channel is transmitted along the path with said compensation data messages being periodically transmitted in the control channel, including receiving the compensation data messages and adjusting transmission characteristics of the user terminal as a function of the compensation data.

4. A method according to claim 3 wherein the compensation data relates to timing and/or frequency errors in respect of the signals transmitted along the path, and including adjusting the timing and frequency of signals transmitted by the user terminal in accordance with the received compensation data.

5. A method according to claim 3 or 4 wherein the timeout control data is transmitted in the associated control channel and including detecting said control data at the user from said control channel.

6. A method according to any one of claims 2 to 5 wherein a cell broadcast channel containing said control data is transmitted to the cells of the network individually, and including detecting said control data from one of the cell broadcast channels at the user terminal.

7. A method according to any preceding claim wherein the network comprises a satellite network with a satellite at said remote location, and including compensating signals transmitted to the satellite from the user terminal in accordance with the received compensation data messages to compensate for orbital movement of the satellite relative to the user terminal.

8. A method according to any preceding claim including transmitting a timeout signal from the user terminal along the path towards the remote location, for disabling subsequent transmission of signals therefrom to the user terminal.

9. A method according to any preceding claim wherein a radio link is established over diverse ones of said paths, including timing out the paths individually if compensation data messages are not received over the respective paths within a predetermined period.

10. A method according to claim 9 including transmitting a signal towards the remote location over a non-timed out one of the paths for updating the path allocation including disabling subsequent transmission of signals therefrom over the timed-out path to the user terminal.

11. A method according to claim 10 including receiving at the user terminal confirmation that the path allocation updating disabling subsequent transmission of signals therefrom over the timed-out path to the user terminal, has been accepted by the network.

12. A user terminal configured to perform a method according to any preceding claim.

13. A user terminal for a cellular mobile telecommunications network wherein a radio traffic channel established on a path between the user terminal and a remote location is subject to time varying transmission errors as a function of their relative movement during a call, and compensation data messages are periodically and optionally transmitted to the user terminal containing data to compensate for the errors, the user terminal including timing-out processing circuitry to time out the path if the compensation data messages are not received within a predetermined period.

14. A user terminal according to claim 13 wherein the processing circuitry includes a timer to time whether the compensation data messages are received within the predetermined period.

15. A method of operating a base station of a mobile telecommunications network to release a radio path to a remote user terminal that is subject to time varying transmission errors comprising transmitting compensation data messages successively to the user terminal with a variable periodicity during a call, the messages containing data to compensate for the errors in signals transmitted by the user terminal towards the base station, and transmitting timer period data as a function of the periodicity of the compensation data messages, the user terminal being operative to time out the radio link if the compensation data messages are not received within a predetermined period determined as a function of the timer period data.

16. A method according to claim 15 including controlling signals transmitted to the user terminal so that said compensation data messages are not received with the predetermined period at the user terminal whereby to cause time-out of the path.

17. A method according to claim 16 including changing the timing of the transmitted data compensation messages.

18. A method according to claim 16 or 17 including transmitting timeout control data for the user terminal to alter said predetermined period.

19. A base station for a mobile telecommunications network comprising a transmitter/receiver configuration to provide a radio path with a remote user terminal that is subject to time varying transmission errors during a call, the transmitter being configured to transmit compensation data messages with a variable periodicity during a call for the user terminal containing data to compensate for said errors in signals transmitted by the user terminal towards the base station, and timer period data as a function of the periodicity of the compensation data messages whereby the user terminal can time out the radio path if the compensation data messages are not received within a predetermined period.

20. A base station according to claim 19 including session release means to control signals transmitted to the user terminal so that said compensation data messages are not received with the predetermined period at the user terminal whereby to cause time-out of the path.

21. A base station to claim 20 including means for changing the timing of the transmitted data compensation messages.

22. A method according to claim 20 or 21 including means for transmitting timeout control data for the user terminal to alter said predetermined period.

23. A base station according to any one of claims 19 to 22 operable in diverse communications mode over diverse communication paths to a user terminal, including means for receiving a time out signal over at least one but not all of the diverse paths indicating that communications from the user terminal thereto have ceased on at least one but not all of the diverse paths.

24. A base station according to claim 23 including means to transmit towards the user terminal a handshake signal to confirm the change in allocation of diverse paths.

25. A base station operable in diversity mode, including a receiver to receive an indication transmitted by a user terminal indicating that the user terminal has timed out one or more but not all of the diverse radio paths due to compensation data corresponding to those paths being not received by the user terminal from the base station within a predetermined period, the base station being operable to reconfigure the path allocation in dependence on the indication received from the user terminal and further confirm the new configuration to the user terminal with a handshake message.

FIG. 1

163 SPOT BEAMS COVERING DOWN TO 0 DEG ELEVATION

FIG. 2

Z-ARCS AND SPOT SHAPES ON EARTH BY BEAM TYPE (163 BEAMS, 10,355 KM.)

FIG. 3

FREQUENCY

25kHz

BP
40/6ms

SLOT

TIME

FIG. 4

16

17

19 DOWN

DETECTOR MULTIPLEXER /
DEMULTIPLEXER

BEAM
PROCESSOR

19 UP

BEAM
PROCESSOR

18

FIG. 5

FIG. 6

FIG. 7

FIG. 8

FIG. 9

SATELLITE 3a

SATELLITE 3b

40

41

1b

1a(Tp)

1a(Tp)

42

43

UT 1

Rx    Rx    Tx    Tx

D = 30ms +/- OFFSET

w1    w2    w1    w2    w1    w2

40ms

FIG. 10

3a

1a

(To,Eo)    (Tp,Ep)

SAN 1

UT 1

Z

FIG. 11

**FIG. 12 (UT 1)**

S12.1 — Receive timer period data L from BCCH/SACCH

S12.2 — Update timer periods

S12.3b / S12.3a — Reset timer T2 (path 1b,2b) / Reset timer T1 (path 1a,2a)

S12.4b / S12.4a — Run timer T2 / Run timer T1

S12.5b / S12.5a — T2 timed out? / T1 timed out?

No / Yes — timing/Doppler message detected?

S12.6b / S12.6a

send release message1 on path 1a,2a / send release message on path 1b,2b

S12.7b / S12.7a

break radio link

S13.7

determine
transmission rate for
compensation data
messages

S13.1

false compensation
message data

S13.6

compute
compensation
message data

S13.2

compute compute
timer period data L

S13.4

encode compensation
data in SACCHdown
message block

S13.3

encode data L in
SACCHdown
or BCCH message
block

S13.5

# FIG. 13
# (SAN 1)

**European Patent Office**

## EUROPEAN SEARCH REPORT

Application Number

EP 99 30 2641

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 522 430 A (FUJITSU)<br>13 January 1993 (1993-01-13)<br>* column 2, line 33 - column 3, line 21 *<br>--- | 1,13,15,<br>19,25 | H04B7/185 |
| A | EP 0 888 024 A (ICO)<br>30 December 1998 (1998-12-30)<br>* claims 1-20 *<br>--- | 1,13,15,<br>19,25 | |
| A | US 5 008 953 A (DAHLIN ET AL.)<br>16 April 1991 (1991-04-16)<br>* column 3, line 10 - column 4, line 6 *<br>----- | 1,13,15,<br>19,25 | |
| | | | TECHNICAL FIELDS SEARCHED (Int.Cl.7) |
| | | | H04B |

The present search report has been drawn up for all claims

| Place of search | Date of completion of the search | Examiner |
|---|---|---|
| THE HAGUE | 1 October 1999 | Bischof, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 30 2641

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-1999

| Patent document cited in search report | | Publication date | Patent family member(s) | | Publication date |
|---|---|---|---|---|---|
| EP 522430 | A | 13-01-1993 | JP | 5012143 A | 22-01-1993 |
| | | | AU | 636267 B | 22-04-1993 |
| | | | AU | 1943392 A | 21-01-1993 |
| | | | CA | 2073140 A,C | 06-01-1993 |
| | | | US | 5379307 A | 03-01-1995 |
| EP 888024 | A | 30-12-1998 | JP | 11074833 A | 16-03-1999 |
| US 5008953 | A | 16-04-1991 | US | 5042082 A | 20-08-1991 |
| | | | AU | 625128 B | 02-07-1992 |
| | | | AU | 5530090 A | 16-11-1990 |
| | | | AU | 626123 B | 23-07-1992 |
| | | | AU | 5934090 A | 17-01-1991 |
| | | | AU | 625085 B | 02-07-1992 |
| | | | AU | 5969890 A | 17-01-1991 |
| | | | CA | 2030607 A | 18-10-1990 |
| | | | CA | 2033340 A | 27-12-1990 |
| | | | CA | 2033971 A | 27-12-1990 |
| | | | CN | 1048472 A,B | 09-01-1991 |
| | | | DE | 69021794 D | 28-09-1995 |
| | | | DE | 69021794 T | 22-02-1996 |
| | | | DE | 69022307 D | 19-10-1995 |
| | | | DE | 69022307 T | 08-02-1996 |
| | | | EP | 0406186 A | 02-01-1991 |
| | | | EP | 0406193 A | 02-01-1991 |
| | | | HK | 173995 A | 24-11-1995 |
| | | | HK | 180295 A | 01-12-1995 |
| | | | JP | 2799244 B | 17-09-1998 |
| | | | JP | 4500446 T | 23-01-1992 |
| | | | JP | 2799245 B | 17-09-1998 |
| | | | JP | 4500448 T | 23-01-1992 |
| | | | KR | 9513303 B | 02-11-1995 |
| | | | KR | 9702756 B | 10-03-1997 |
| | | | KR | 9709704 B | 17-06-1997 |
| | | | PH | 26898 A | 03-12-1992 |
| | | | WO | 9013187 A | 01-11-1990 |
| | | | WO | 9100657 A | 10-01-1991 |
| | | | WO | 9100658 A | 10-01-1991 |
| | | | US | 5257401 A | 26-10-1993 |
| | | | US | 5200957 A | 06-04-1993 |

EPO FORM P0459

For more details about this annex : see Official Journal of the European Patent Office, No. 12/82